# EUROPEAN PATENT APPLICATION

(11) **EP 2 186 775 A1**
(43) Date of publication of application: **19.05.2010**
(21) Application number: 08792703.4
(22) Date of filing: 25.08.2008
(51) Int. Cl.: C01B 31/02, B01J 3/00, B01J 19/12

(54) **METHOD FOR DECOMPOSING CARBON-CONTAINING COMPOUND, METHOD FOR PRODUCING CARBON MICROSTRUCTURE, AND METHOD FOR FORMING CARBON THIN FILM**

(30) Priority: 27.08.2007 JP 2007220324; 15.10.2007 JP 2007267780
(71) Applicant: Toyo University, Tokyo 112-8606 (JP)
(72) Inventor: MAEKAWA, Toru, Saitama-ken (JP); FUKUDA, Takahiro, Saitama-ken (JP); FUKUDA, Nami, Saitama-ken (JP); HASUMURA, Takashi, Saitama-ken (JP); ISHII, Koji, Saitama-ken (JP); RANTONEN, Nyrki, Saitama-ken (JP); NAKAJIMA, Yoshikata, Saitama-ken (JP); HANAJIRI, Tatsuro, Saitama-ken (JP)
(74) Representative: Grünecker, Kinkeldey, Stockmair & Schwanhäusser Anwaltssozietät
(86) International application number: PCT/JP2008/065095
(87) International publication number: WO 2009/028451

(57) **Abstract**

There is provided a method for decomposing a carbon-containing compound including: changing the condition of the carbon-containing compound into a subcritical fluid, a critical fluid or a supercritical fluid state; irradiating the carbon-containing compound with light to decompose, wherein the carbon-containing compound is an organic compound. According to an aspect of the present invention, a carbon nano/microstructure such as a nano/microparticle is obtained at a temperature lower than those used conventionally.

## Description

### Technical Field

The present invention relates to methods for decomposing carbon-containing compounds, to methods for producing carbon nano/microstructures in which carbon nano/microstructures such as carbon nano/micro particles and carbon nanocoils are obtained thereby, and to methods for producing carbon thin films. More particularly, the present invention relates to a method for decomposing a carbon-containing compound in which a carbon nano/microstructure is generated by irradiating a carbon-containing compound such as an aromatic compound with light to decompose the compound, a method for producing a carbon nano/microstructure, and a method for producing a carbon thin film.

### Background Art

Carbon materials that are attracting public attention because of their applicability as functional materials in a wide range of fields such as electronics, medicine, composite material and energy, include carbon nano/microstructures such as fullerene and carbon nanotube (CNT). Fullerene, which is represented by the soccer ball-shaped C₆₀, was discovered in 1985 by H.W. Kroto, F.E. Smalley and the like, and is recognized as a new allotrope of carbon (see Non-Patent Document 1). CNT is a carbon material having a form in which carbon having a graphite structure is wound into a tube shape, and the CNT is in general classified into single-walled carbon nanotube (SWCNT) and multi-walled carbon nanotube (MWCNT). The interlayer distance in the layered structure of the CNT is about 3.4 angstroms, and this distance is closer to 3.354 angstroms, which is the interlayer distance in graphite. The carbon-carbon bonding in the CNT is not only of sp² type but is also three-dimensionally constructed, and therefore, mechanical properties thereof are extremely strong for the CNT to be used as a material (see Non-Patent Document 2).

Representative methods for synthesizing fullerene or a CNT include an arc discharge method, a laser abrasion method, a chemical vapor development method (CVD), and the like. The laser abrasion method is suitable for producing an SWCNT or nanohorn, the arc discharge method yields nanotubes with fewer surface defects, while the CVD method has an advantage of high productivity. However, all of these methods involve very high production temperatures, which are as high as 600 to 1000°C or more.

In addition to the fullerene and CNT, there are also available carbon materials of a hollow structure constituted of graphite layers, and the materials are referred to as, e.g., nanographite structure, carbon nanocapsule or carbon nano-onion. These materials are expected to be used in applications such as cushioning materials, lubricants, abrasives, cell electrode materials, electron emission elements, and gas storage devices. These carbon materials are generated when carbon nano/micro particles having an amorphous structure which are generated by arc discharge or laser abrasion, are heated to ultrahigh temperatures reaching up to 2000°C to 3000°C in an inert gas atmosphere (see, for example, Patent Document 1). Alternatively, the materials can also be generated by irradiating carbon nano/micro particles with a CO₂ laser from a carbon target in an inert gas atmosphere at 5 to 10 atmospheres, to thereby generate atomic or clustered carbon (see, for example, Patent Document 2).

On the other hand, attention was paid to the fact that the kinetic energy of molecules in a supercritical state is high, and thus there have been proposed a method of producing a carbon solid film by decomposing a hydrocarbon derivative under the action of a metal catalyst while using a supercritical fluid as a carrier fluid, and the like (see, for example, Patent Document 3). In this method, the metal catalyst is heated to 1600°C to 1800°C to convert the catalyst into an activated species, and then this is used in the reaction.

In conventional production methods of generating such carbon materials as mentioned above, a carbon target is evaporated to first obtain a monatomic state of carbon, and then this is further constructed into a graphite structure, or alternatively, amorphous carbon nano/micro particles are made to undergo a structural change to be converted to the desired structure. Thus, the bonding between carbon atoms is loosened and dissociated by a treatment at high temperature. Even in the methods making use of a hydrocarbon derivative, treatments at high temperature are used.

However, in order to proceed with the practicalization of highly functional carbon materials which are expected to have such unique functions, it is necessary to develop a production method that is safer and easier, and it is desirable to realize production at lower temperature.

Furthermore, if it is possible to produce a highly functional carbon material by directly using a substance recycled from waste materials and the like, without limiting the raw material for production to the carbon target, supply of the raw material is increased, and thus utilization is made easy. It is also possible to expand the development of application over a wider range of fields, and the reuse of resources can be promoted.

Meanwhile, the technology of low permittivity (low-k) thin film production which is used at the time of semiconductor production, is one of core technologies in the semiconductor industry. In the thin film production according to conventional chemical vapor deposition (CVD) methods, a raw material hydrocarbon or the like is heated to decompose at about 900°C in a chamber, and is deposited on a base plate made of, e.g., silicon.

However, since the heating temperature is 900°C or higher in the CVD methods, it has been difficult to produce a thin film which does not have heat resistance. Furthermore, the production apparatuses used in the CVD methods are large in scale and expensive. Therefore, there has been a demand for a method for producing thin films conveniently and easily at low cost.
Several technologies have been proposed as the means to solve the problems described above (see, for example, Patent Document 4), but there is still room for improvement.

Non-Patent Document 1
   H.W. Kroto, J.R. Heath, S.C. O'Brien, R.F. Curl, and R. E. Smalley, "C60: Buckminsterfullerene", Nature, 318, 162-163 (1985)
Non-Patent Document 2
   S. Iijima, "Helical microtubules of graphitic carbon", Nature, 354, 56-58 (1991)
Patent Document 1
   Japanese Patent Laid-Open No. 2005-281065
Patent Document 2
   Japanese Patent Laid-Open No. 2003-206120
Patent Document 3
   Japanese Patent Laid-Open No. 2006-144084
Patent Document 4
   Japanese Patent Laid-Open No. 2006-144084

### Disclosure of the Invention

### Problems to be Solved by the Invention

The first embodiment of the present invention is a method for decomposing a carbon-containing compound comprising: changing the condition of the carbon-containing compound into a subcritical fluid, a critical fluid or a supercritical fluid state; irradiating the carbon-containing compound with light to decompose, wherein the carbon-containing compound is an organic compound.

The second embodiment of the present invention is a method for producing a carbon thin film comprising: sealing a carbon-containing compound in a critical fluid cell, and forming a supercritical state; and irradiating the content of the critical fluid cell with a laser beam in an ultraviolet wavelength.

### Brief Description of the Drawings

FIG. 1 is a schematic construction diagram illustrating an example of the apparatus used in a first embodiment;
FIG. 2 is a photographic image of the product obtained using sample 1, obtained with a transmission electron microscope;
FIG. 3 is an electron beam diffraction diagram of the product obtained using sample 1, obtained with a transmission electron microscope;
FIG. 4 is a Raman spectrum of the product obtained using sample 1;
FIG. 5 is a photographic image of the product obtained using sample 2, obtained with a transmission electron microscope;
FIG. 6 is a photographic image of the product obtained using sample 4, obtained with a scanning electron microscope;
FIG. 7 is a photographic image of the product obtained using sample 4, obtained with a transmission electron microscope;
FIG. 8 is a diagram obtained by atomic force microscopic (AFM) observation of the thin film of Comparative Example B1;
FIG. 9 is a diagram obtained by AFM observation of the thin film of Example B1;
FIG. 10 is a diagram illustrating the structural analysis results obtained by a Raman scattering system, of the thin film of Example B1;
FIG. 11 is a diagram illustrating the EDS elemental analysis results of the thin film of Example B1;
FIG. 12 is a diagram obtained by AFM observation of the thin film of Reference Example 2 (T-Tc = 0°C);
FIG. 13 is a diagram obtained by AFM observation of the thin film of Reference Example 3 (T-Tc = 1°C);
FIG. 14 is a diagram obtained by AFM observation of the thin film of Example B2 (T-Tc = 3°C);
FIG. 15 is a diagram obtained by AFM observation of the thin film of Example B3 (T-Tc = 5°C);
FIG. 16 is a plot illustrating the values obtained by calculating the RMS of the thin film surface height calculated from the image obtained by AFM observation; and
FIG. 17 is a plot illustrating the values obtained by calculating the RMS of the thin film surface height calculated from the image obtained by AFM observation.

### Best Mode for Carrying Out the Invention

The present invention will now be described by embodiments, but the present invention is not intended to be limited to the following embodiments. Furthermore, the elements having the same function or similar functions in the diagrams will be assigned with the same or similar symbols, and accordingly explanations will be omitted.

### [First embodiment]

It is an object of the first embodiment to provide a method for producing a carbon nano/microstructure, in which a carbon nano/microstructure that is expected to exhibit its structure-derived function in various applications, is obtained easily and more safely under the conditions causing less energy consumption.

It is another object of the first embodiment to provide a method for decomposing a carbon-containing compound, in which it is made possible to directly use a carbon-containing compound as a production raw material for a carbon nano/microstructure, and a carbon nano/microstructure can be produced at a lower temperature than those used conventionally, using a material recovered from waste materials and the like as a production raw material for a functional material.

In order to solve the problems described above, the decomposition conditions for a carbon compound were examined, and it was found that decomposition of a carbon-containing compound and production of a carbon nano/microstructure can be achieved at an extremely low temperature as compared with the temperature used conventionally, by using the subcritical to supercritical properties. That is, according to the first embodiment, it is possible to produce a carbon nano/microstructure at a very low temperature as compared with the temperature used conventionally, and the safety in the supply of a carbon nano/micro particle or a carbon nanocoil can be enhanced. Furthermore, since carbon nano/microstructures can be produced by directly decomposing a variety of organic carbon compounds as raw materials without limiting the raw material to carbon materials, effective use of carbon compounds that are recovered from waste materials and the like as raw materials for the production of functional materials, is promoted. Hereinafter, explanations will be given in detail.

### [Decomposition of carbon-containing compound]

In regard to the gas-liquid phase equilibrium, it is known that there is a certain temperature called critical point, at or above which the gas does not turn into the liquid even when compressed, and there is no distinction between the gas and the liquid. The temperature and pressure at the critical point are referred to as the critical temperature Tc and the critical pressure Pc, and the density of the fluid at this time is referred to as the critical density. At the critical point (or near the critical point) and in a supercritical (the temperature and/or pressure exceeding the critical point) state, a substance becomes a high-density fluid which exhibits intermediate properties between the properties of gas and the properties of liquid, and it is known that the dissolving capability of the fluid markedly changes before and after the critical pressure so that selective extraction of a particular substance which is considered difficult in conventional extraction, is made possible, or since the kinetic energy of the molecules is high, the fluid is effective as a site for chemical reactions such as oxidative degradation or monomerization of a polymer substance. A subcritical state in which the liquid phase and the gas phase co-exist in a temperature range lower than the critical point, is also associated with high kinetic energy of the molecules pursuant to the critical (at or near the critical point) and supercritical state, and the density fluctuation near the interface is very large.

When an organic compound is irradiated with light (electromagnetic wave) in an ordinary state, the compound molecules are excited by a light having a wavelength which falls in the absorption band of the compound, and the bond is dissociated. If the dissociated atoms do not form bonds with new atoms having higher bonding energy, the atoms recombine upon termination of the light irradiation and go back to the original state. An aromatic compound has an absorption band in the ultraviolet wavelength region or in the visible wavelength region, depending on the molecular weight. When an aromatic compound in the liquid state is irradiated with ultraviolet radiation, the compound is decomposed, and amorphous carbon or graphite is generated. At this time, it was found that if the intensity of irradiation is increased, there is generated a slight amount of a nano/microstructure (carbon nano/micro particle) of nesting form, which is formed from graphite layered carbon. Furthermore, it was revealed that when an aromatic compound is converted into a subcritical to supercritical fluid, the same carbon nano/micro particle is generated even if the intensity of irradiation of ultraviolet radiation is decreased. These results show that it is possible to make the production of a carbon nano/microstructure for which the possibility of generation is very low in an ordinary state, easier by allowing the carbon nano/microstructure to react in a subcritical to supercritical state.

The reason for this phenomenon is not clear, but one factor may be such that a fluid in a subcritical to supercritical state has a very high molecular density and very high kinetic energy. That is, when a molecular bond is dissociated in a subcritical to supercritical state, since the kinetic energy is high, the possibility for the dissociated element to meet with various other components is increased. Thus, it is speculated that the possibility of the generation of a molecule which is difficult to obtain in an ordinary reaction state is enhanced, or the diversity and uniqueness of the product that can be generated is enhanced. In fact, in the case of fullerene crystal placed in a critical fluid, generation of various nano/microstructures having a reticular shape, a sheet shape, a spiral shape and the like is observed, that is, morphological change is observed, irrespective of the fact that the crystal is not dissoluble or dispersible in the fluid. This shows that in a subcritical to supercritical region, the high kinetic energy allows the atoms or molecules to be liberated from the restriction of motion, and the degree of freedom in migration and realignment is increased, so that the possibility of the occurrence of atomic or molecular alignments that are difficult to obtain in an ordinary state, can be increased. Therefore, the subcritical to supercritical fluid state can be said to be a field of reaction that is perfect for increasing the probability of generating a particular structure having high regularity when an atom released from dissociation of a bond forms a new bond with another atom.

Furthermore, it is speculated that in the subcritical to supercritical state, since the molecular density is high, it is easier for the molecules to exert influence on each other during the reaction, and thus orientation is somehow brought to the arrangement of the dissociated atoms. The carbon arrangement and electron state of an aromatic ring such as a benzene ring are close to those of a graphite layer structure, so that in a reaction field where an aromatic compound is present, a dissociated carbon atom may be easily oriented in the arrangement of a graphite structure under the influence of the carbon arrangement and electron state of the aromatic ring. Although the reason is not clear, the mechanism of the generation of, e.g., CNT which is constructed from graphite layers, is thought to be such that carbon atoms resulting from dissociation of bonds form the CNT and the like through the C₂ state. Orientation into a graphite structure under the influence of the aromatic compound may also serve as a factor even in the reaction mechanism involving C₂. Furthermore, from the viewpoint that the graphite layer can form particles not in a flat plate shape but in a nesting-like bent form, the orientation is thought to be resulting from the influence of other molecules.

On the other hand, an aliphatic compound can undergo decomposition in a critical(or near the critical) state to supercritical state, but is difficult to serve as a predisposing factor for orientation in the same way a benzene ring does. Therefore, in the case of decomposition of an aliphatic compound, the property of orientation into a graphite layer structure is low, and the product becomes amorphous carbon. Accordingly, in order to make it easy to produce a carbon nano/microstructure from an aliphatic compound, it is required to supply a substance serving as a predisposing factor imparting orientation property, to the reaction field. Examples of such predisposing factor include the co-presence of an aromatic compound, electromagnetic deflection due to ionization/polarization or excitation, and the like, but it is believed that energy supply based on the light irradiation in a critical state serves as a predisposing factor causing the orientation.

The present invention was made under such circumstances, and the present invention produces a carbon nano/microstructure using a subcritical to supercritical system, where the kinetic energy of molecules or atoms is high. The carbon-containing compound used as a reaction substrate is an organic carbon compound which includes an aromatic compound or an aliphatic compound. A decomposition reaction is made to proceed by converting this organic carbon compound into a fluid in a subcritical to supercritical state and irradiating the fluid with light (electromagnetic wave), and a carbon nano/microstructure is produced from the carbon atoms dissociated by the decomposition reaction. Thereby, generation of a carbon nano/microstructure is made possible at a temperature lower than those used conventionally.

### [Method for producing carbon nano/microstructure]

The method for decomposing a carbon-containing compound according to the first embodiment, and a method for producing a carbon nano/microstructure according to the decomposition method, will now be described in detail.

The aromatic compound used as a reaction substrate is a compound having a substituted or unsubstituted aromatic ring, and is not limited to an aromatic hydrocarbon. The aromatic compound may contain substituent elements such as oxygen, nitrogen, sulfur, phosphorus and halogen elements, and can still be used even if the compound has various functional groups or aliphatic hydrocarbon groups such as a hydroxyl group, a carbonyl group, a carboxyl group, an ether bond, an amino group, an imino group, a nitro group, a cyano group, an isocyano group, a thiol group, a thioether bond and a sulfo group, as a substituent. Examples of the aromatic ring include a monocyclic, 6-membered ring hydrocarbon such as benzene, toluene, xylene, mesitylene, cumene, styrene or phenylethane; a polycyclic, 6-membered ring hydrocarbon such as naphthalene, anthracene, phenalene, phenanthrene, biphenyl, indene, biphenylene or triphenylene; partial hydrogenation products thereof; and the like. Compounds obtained by introducing those substituents or substituent elements to these cyclic hydrocarbons may be listed as the substituted aromatic rings. For example, there may be mentioned 1,3,5-trichlorobenzene or hexafluorobenzene.

One or more can be appropriately selected from these aromatic compounds having a cyclic structure, and can be used as reaction substrates. The compounds are not necessarily used alone, and a mixture of plural kinds of aromatic compounds may also be used. If it is intended to decompose plural kinds of aromatic compounds at the same time, it is required that the irradiated light being supplied include lights having the absorption band wavelengths of the respective compounds. A mixture of an aromatic compound and an aliphatic compound may also be used. From the viewpoint of being convertible into a subcritical to supercritical state at low temperature, a compound that is liquid at normal temperature is preferred. Furthermore, an aromatic compound that is substituted with halogen such as fluorine, chlorine, bromine or iodine is preferred as a reaction substrate, because carbonization as a result of leaving of the halogen atom proceeds with ease.

Examples of the non-aromatic substrate include aliphatic compounds, such as saturated or unsaturated hydrocarbons; oxygen-containing hydrocarbons such as alcohols, ethers, ketones, aldehydes and fatty acids; and nitrogen-containing hydrocarbons such as amines and imines, and for example, acetylene, ethylene, diethyl ether, acetone and the like may be mentioned. One or more can be appropriately selected therefrom and used. It is possible to lower the critical temperature by mixing another reaction substrate or a reaction solvent such as carbon dioxide, with one reaction substrate, and it is also possible to utilize this and to thereby apply a low critical temperature to a reaction substrate having high critical temperature. However, since the dissociated carbon atoms easily become amorphous when a reaction solvent or a non-aromatic compound is used, proportions of these substances are appropriately set up in consideration of the decomposition conditions.

The reaction substrate is brought to the critical region when the substrate is placed in a reaction vessel for light irradiation, and elevating the pressure and temperature to the critical pressure and the critical temperature, respectively. When the reaction substrate is brought to a state where the liquid phase and the gas phase co-exist at a temperature lower by about 5°C to 10°C than the critical temperature, the substrate is in a subcritical state, and when the temperature and/or pressure is set to be higher than that of the critical point (or near the critical point), the substrate is in a supercritical state. In actual practice, the mass of the reaction substrate from which the reaction substrate in the reaction vessel obtains the critical density is determined based on the volume of the reaction vessel, and the reaction substrate of this mass is placed and sealed in the reaction vessel and then heated to the critical point temperature. Then, the reaction substrate in the vessel obtains the critical density and the critical pressure. When the mass of the reaction substrate placed in the vessel and/or heating temperature is decreased, the substrate is brought to the subcritical state, and when the mass and/or heating temperature is increased, the substrate is brought to the supercritical state. For example, the critical point of benzene is such that Tc = 289.0°C and Pc = 4.90 MPa, and benzene can be converted into a fluid in a subcritical state where the gas phase and the liquid phase co-exist, at a temperature of 200 to 289°C. The same also applies to other compounds, and in the case of a mixture of plural kinds of compounds, there is a critical point corresponding to the composition, and therefore, the mixture is converted based on this critical point.

The reaction vessel used is a vessel in which light irradiation can be provided to the interior, and pressurization and temperature control can be achieved. Specifically, a heat-resistant, pressure-resistant vessel such as a light-permeable cell produced with a heat-resistant, pressure-resistant material, or an autoclave having a window for irradiation, may be mentioned. The heat-resistant, pressure-resistant material is required to have resistance to solvent, in order not to substantially interact with the reaction substrate.

The reaction substrate which has been converted into a fluid in the subcritical to supercritical state in the reaction vessel, is subjected to a decomposition reaction by supplying an irradiated light using a light irradiating apparatus. The irradiated light used therein includes the light having the absorption band wavelength of the reaction substrate, and is preferably a laser beam from the viewpoint of energy efficiency. However, the reaction can still proceed with a radiated light that is not focused, and sunlight or lamp light can also be used. Since aromatic compounds have absorption bands in the ultraviolet light wavelength region, decomposition proceeds suitably when the compounds are irradiated with a light including ultraviolet light. Since emission of long-wavelength radiation such as infrared radiation causes an increase in temperature, in view of the ease of temperature control in the reaction system, the wavelength region of the irradiated light is preferably the region of short wavelengths which are equal to or shorter than those of visible light, that is, the wavelength region of visible-ultraviolet region, and it is suitable to utilize an irradiated light that is limited to a wavelength region covering from visible light (wavelength of about 700 to 400 nm) to ultraviolet light (about 400 nm to 100 nm). Particularly, a light in the wavelength region of about 200 nm to 400 nm is preferred, and light sources provided for use with ultraviolet light are adequate even from the viewpoint of temperature control in the reaction system. Examples of representative light source and optical system for ultraviolet light include laser systems such as an Nd: YAG laser, a KrF excimer laser and an ArF excimer laser, and there may be mentioned YAG-THG (third-order harmonics: wavelength 355 nm), YAG-FHG (fourth-order harmonics: wavelength 266 nm), YAG (fifth-order harmonics: wavelength 213 nm), KrF excimer (wavelength: 248 nm), ArF excimer (wavelength: 193 nm), and the like. Examples of light source for visible light include YAG-SHG (second-order harmonics: wavelength 535 nm), and the like. Since emission of light of a long wavelength which is equal to or longer than infrared light, makes the temperature control difficult because of the temperature increase in the reaction system, it is difficult to handle the wavelength in a practical manner. However, if it is substantially possible to suppress the temperature increase in the reaction system due to light irradiation, by means of water cooling or cooling using a Peltier element, the light may include a light having a wavelength in the vicinity of the infrared region. Only under limited circumstances where temperature control is made possible by intermittent irradiation with, e.g., a pulse laser, the reaction can be made to proceed by maintaining the condition of the reaction system.

Since aromatic compounds and unsaturated hydrocarbons decompose under the irradiation of ultraviolet light, irradiation with ultraviolet radiation in the subcritical to supercritical state, particularly in the critical (or near the critical) sate to supercritical state, allows decomposition of various organic carbon compounds. The organic carbon compounds undergo leaving of hydrogen or a functional group, bonding/reaction of a free-form residue with another molecule, re-decomposition and the like, and finally turn into graphite or amorphous carbon. During the reaction of generating a carbon nano/microstructure from a reaction substrate irradiated with light, the presence of carbon alignment in the form of aromatic ring brings orientation, which induces free carbon atoms to align in the form of graphite, to the field of reaction under the effect of the electron state of the carbon alignment, and thus disintegration of the compound and rearrangement of carbon atoms proceed so that graphite layers are laminated. As a tendency, a regular structure in, e.g., nesting form is formed. The high density state of the subcritical to supercritical state is important in terms of exerting influence on the alignment of carbon atoms, and since a subcritical to supercritical fluid of the reaction substrate alone, which does not include any carrier or medium, easily forms a carbon nano/microstructure, it is preferable that the concentration of the aromatic ring in the reaction system be high. Accordingly, an embodiment in which the reaction substrate is composed only of an aromatic compound, or an embodiment in which the reaction substrate is composed only of an aromatic compound having few or no non-aromatic substituents, is suitable. Furthermore, from the viewpoint of the influence exerted by the products generated from the elements of the reaction substrate that are different from carbon, it is preferable to use a compound having fewer constituent elements that are different from carbon, that is, an aromatic compound having a high proportion of carbon occupying in the molecular structure, as the reaction substrate. On the other hand, in the case of a non-aromatic compound, energy supply by light irradiation at near the critical point somehow serves as a predisposing factor which gives orientation to free carbon atoms in a disordered state, and particularly, it is preferable to perform irradiation with a light of high intensity (for example, an output power of about 300 mW or higher) at near the critical point.

Depending on the state of the reaction system, the carbon atoms generated by light irradiation may be laminated on the vessel walls to form a thin film of a specific structure, or may finely aggregate to form carbon nano/microstructures having a particulate shape or a coil shape, having a size of about several ten nanometers to several ten micrometers, so as to deposit in the state of being single particles or particle aggregates. Such a carbon nano/microstructure in a thin film state or of a particulate shape can be efficiently laminated and aggregated using a base plate, and the material of the base plate may be, for example, an inorganic material such as alumina, graphite, boron nitride, or silicon carbide. The size of the carbon nano/microstructure can be adjusted to a certain extent by controlling the wavelength of the irradiated light or the amount of irradiated energy, and the amount of production and size of the carbon nano/microstructure is increased along with an increase in the amount of energy supplied.

When light irradiation is performed, coexistence of substances that act as receptors for hydrogen in the reaction system facilitates the liberation of hydrogen from the reaction substrate and therefore preferred from the viewpoint of the progress of reaction. In this regard, since a metal oxide consumes hydrogen when reduced, if present in the reaction vessel, the metal oxide accelerates carbonization and acts advantageously on the promotion of generation of the carbon nano/microstructure.

Carbon nano/microstructures exist in various forms, and examples include structures constituted of graphite layers, such as a carbon nano/microparticle and a carbon nanotube; structures in which amorphous carbon forms a certain shape, such as a carbon nanocoil; and the like. Structures having a form of hemisphere or partial sphere, structures having recesses on the surface, hollow structures such as a basket-shaped structure, and the like are also generated.

In regard to the carbon nanocoil or carbon nanotube, generation and extension can be accelerated by allowing a substance serving as a nucleus to be co-present in the reaction system, and examples of nucleus substances for growth include simple metal elements such as aluminum, nickel, iron, cobalt, tungsten, molybdenum, magnesium, gold, silver, tin, titanium, tantalum and silicon; alloys of the metals, such as stainless steel, steel, nickel-based alloys and magnesium alloys; and composites of metals and metal oxides, such as Fe/ITO [indium tin oxide]. Particularly, use of a FeNiCr-based alloy such as stainless steel is suitable for the formation of the carbon nanocoil. When these nucleus substances are introduced to the reaction system while being in the form of, e.g., base plate or rod, growth of, e.g., tubes is initiated from the surface of nucleus substance, or a trace amount of the nucleus substance is diffused into the critical fluid which has been irradiated with light, to thus act as nuclei for forming coil ends.

Carbon nanocoils formed from amorphous carbon are different from other carbon nano/microstructures such as CNT or nano/micro particles, in terms of that it is not necessary for carbon to be arranged in the graphite structure. If the reaction system is set to be in the critical(or near the critical) state to supercritical state, or if the reaction is made to proceed in the co-presence of a nucleus substance which grows coil structures, by increasing the intensity of irradiation, coil-shaped nano/microstructures can be suitably generated. Therefore, if the metals mentioned above are present as nucleus substances for growth under a circumstance where the amount of free carbon being generated is large, coil-shaped nano/microstructures are easily generated. It is thought to be important that the rate of formation of the coil structure (rate of growth) is relatively fast, and the fluid has a high density and high homogeneity. In this connection, it is thought that metal nuclei which diffuse from FeNiCr alloys to the fluid are useful, and irradiation with ultraviolet radiation in the critical(or near the critical) state to supercritical state with high kinetic energy is important for the diffusion of the metal nuclei.

The product obtainable by light irradiation generally turns out to be a mixture of embodiments including the nano/microstructures as described above. Therefore, in order to obtain a carbon nano/microstructure of a particular structure which is suitable for the use, the product can be provided for the use, by removing amorphous carbon from the product as necessary, or by appropriately selecting and carrying out a suitable method for the desired nano/microstructure from conventionally known purification methods. For example, purification can be carried out using a heat treatment making use of the difference in the heat-resistant temperature (burnout resistant temperature), which is attributable to the difference in the structure of amorphous carbon and graphite or to the difference in, e.g., the particle dimension.

Many of carbon-containing compounds have a critical temperature of 500°C or less, and particularly a significant number of aliphatic hydrocarbon compounds or aromatic compounds, which have 12 or fewer carbon atoms, can be converted into fluids of the subcritical to critical region by heating at 500°C or less. Benzene is considered to have a low critical temperature (289°C) even among cyclic aromatic compounds, and is highly preferable as a reaction substrate for generating a carbon nano/microstructure at a low temperature of about 300°C. In this regard, fluorobenzene (critical temperature: 288°C) and the like are also suitable. It is understood that benzene or a benzene-based compound such as mono- or polyhalogenated benzene is likely to generate particles having a graphite structure, and the formation and extension of the graphite structure based on dehydrogenation or dehalogenation of aromatic rings and bond polycyclization may easily proceed.

The carbon nano/microstructure of hollow particles of nesting form, which is generated using an organic carbon compound as a reaction substrate, has a shape of the walls formed from graphite layers are three-dimensionally closed. Thus, the carbon nano/microstructure has high mechanical strength and is chemically stable. Furthermore, just like a carbon nanotube, the carbon nano/microstructure is promising as a functional material which stores metal, gaseous substances, chemically unstable substances or the like in the hollow part to thereby protect the substances from oxidation and other reactions.

### [Application/properties]

The carbon nano/microstructure which is obtainable by decomposition of a carbon-containing compound as described above, can be used as a material for electric/electronic devices such as an energy converter, an electron emitter and a nanoinductor; a medical material such as a biological tracer; an absorbent/adsorbent material such as a hydrogen storage material; a filter material such a dense filter; a composite material that is incorporated into catalysts, lubricants, plastic molded products or structural materials as a filler or a reinforcing agent; or the like, in accordance with the structure. The carbon nano/microstructure is also promising as a functional material in various fields, such as in the applications to micro-operation devices such as drug delivery, nanosprings and nanosized bearings.

### [light for irradiation]

Decomposition of an aromatic compound requires irradiation with a light in the ultraviolet wavelength region, but in the present invention, a state in which the decomposition reaction of an aromatic compound can still proceed even under the action of visible light, which does not have the absorption band wavelength, exists at near the critical point, generally in the temperature range of about Tc±3°K. That is, decomposition occurs under the action of an irradiated light having a wavelength that is not included in the absorption band of the reaction substrate. Of course, it is preferable, with higher reaction efficiency, to use ultraviolet light, which has the absorption band wavelength of the reaction substrate; however, because correspondence between the reaction substrate and the wavelength of the irradiated light is not essential, the degree of practical freedom is increased. In other words, it is allowable to make a compound having its absorption band in the ultraviolet light region, to react under the irradiation of a light other than ultraviolet light, so that when a mixture of plural compounds is used as the reaction substrate, the irradiated light does not have to include all of the lights having the absorption band wavelengths of the respective compounds.

Although the reason why the decomposition reaction proceeds as a result of irradiation with a light having a wavelength other than the absorption band wavelength of the reaction substrate at near the critical point, is not clear, it is thought to be attributable to the unique nature that can be seen near the critical point. At near the critical point, it is understood that the kinetic energy of molecules is in equilibrium with the intermolecular attractive force so that large molecular clusters are prone to occur. It is also understood that fluctuation in the molecular density is abnormally increased, so that the thermodynamic properties (compressibility, magnetic susceptibility, heat capacity and the like) exhibit specificity in response to the increase in fluctuation, and at the same time, reduction of the fluctuation also requires some time. A region exhibiting such a nature is referred to as a critical region. One of the unique phenomena occurring in the critical region is a phenomenon in which the intensity of scattering of the incident light due to density fluctuation is abnormally enhanced (critical opalescence), and at this time, a phenomenon of the fluid turning dark black in color (the transmitted light and scattered light are reduced to the minimum) is also observed. Thus, it is speculated that the influence of fluctuation due to the energy of irradiation is also exerted to the internal energy (electron state). It is speculated that as a result of a coincidence of the decomposition by visible light and generation of a carbon nano/microstructure with the phenomenon of blackening of the fluid, the energy of the irradiated light in the critical region affects the electron state or energy level of the fluid, and thereby decomposition proceeds under an irradiated light having a wavelength other than the absorption band wavelength. That is, in the critical region( or near the critical region), it is speculated that: 1) because of the high molecular density and particularly the generation of molecular clusters, the frequency of collision between molecular bonds and photons is high, and the continuity of the reaction is increased because concatenation, delivery and receipt, and the like of the reaction, so that dissociation of bonds is likely to occur; and 2) the tendency for polarization and excitation of molecular bonds is greatly increased by light irradiation into a state of increased kinetic energy and density fluctuation, and the molecular bonds are susceptible to reaction, thereby the probability for the progress of the decomposition reaction being increased.

### [Production apparatus]

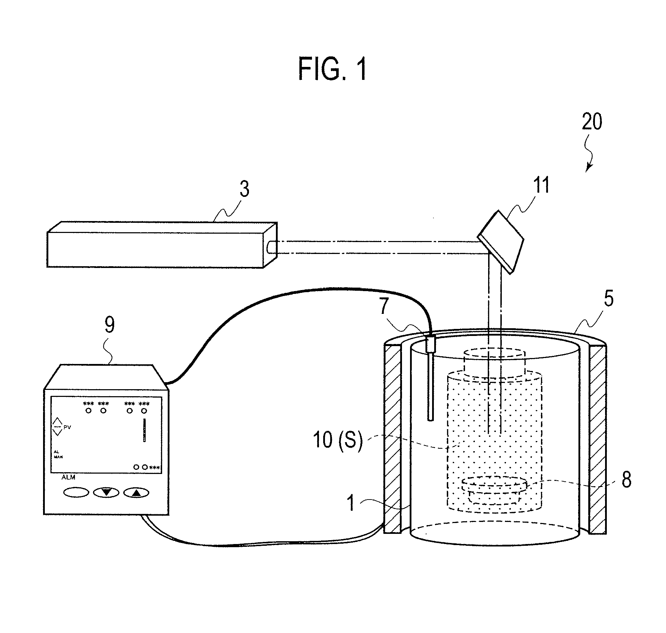

FIG. 1 illustrates an example of the apparatus of the method for decomposing a carbon-containing compound and the method for producing a carbon nano/microstructure according to the first embodiment.

The apparatus 20 has a critical fluid cell 1 and a laser irradiation apparatus 3 for holding a fluid and converting the fluid into a subcritical to supercritical fluid. The critical fluid cell 1 is equipped with a heater 5 that includes the critical fluid cell 1, a temperature sensor 7 that detects the temperature of the critical fluid cell 1, and a temperature controller 9 that controls the heater 5 according to the detected temperature of the temperature sensor 7, so that the temperature inside the critical fluid cell 1 is controlled to a desired temperature. At the bottom of a fluid bed 10 inside the critical fluid cell 1, a base plate 8 on which a thin film grows is provided. A silicon base plate can be used as the base plate 8.

The critical fluid cell 1 is constituted of a pressure-resistant material having light permeability and solvent resistance, such as pressure-resistant glass or transparent quartz. A reaction substrate S is introduced to the fluid bed 10 of the critical fluid cell 1 at the critical (or near the critical) density. Furthermore, when the critical fluid cell 1 is heated to above or below the critical temperature by the heater 5 which is controlled by the temperature controller 9, the reaction substrate S is brought to a subcritical to supercritical state. The critical fluid cell 1 is provided with a translucent light transmitting window 4 at the top of the critical fluid cell 1, where irradiation with laser beam occurs. Thus, when the desired state is maintained, and a laser beam in a predetermined wavelength is irradiated from the laser irradiating apparatus 3, the irradiated light is supplied, via a total reflective mirror 11, through the light transmitting window 4 to the fluid bed 10 of the critical fluid cell 1.

The apparatus 20 is suitable for a small-scale batch type treatment, but the constitution concerning the structure of the critical fluid cell 1 and the supply of substrate may be modified so as to enable an intermittent flow treatment.

### [Example A]

The present invention according to the first embodiment will now be further described in Example A, but the present invention is not intended to be limited to this Example A.

The following operation was carried out using a stainless steel cell having a light transmitting window 4 made of quartz, as the critical fluid cell 1 in the apparatus as illustrated in FIG. 1.

### (Sample 1)

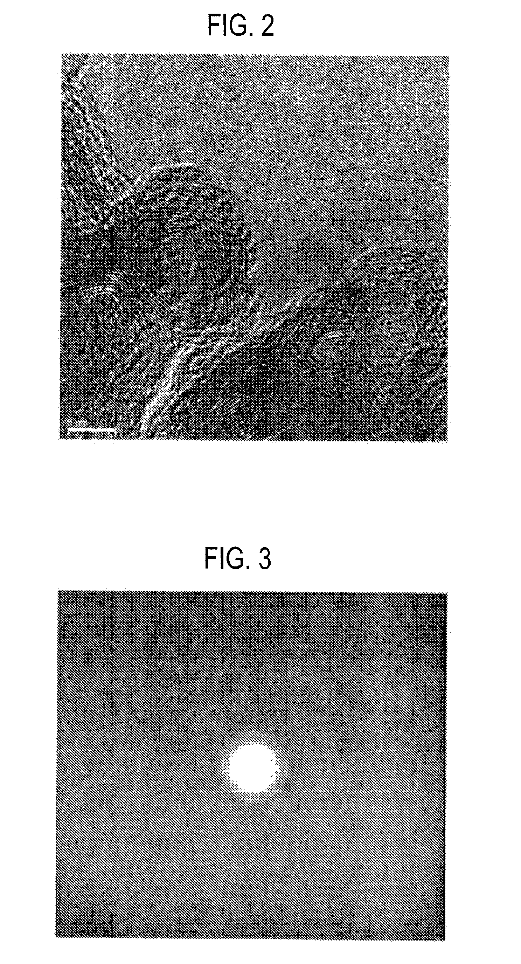

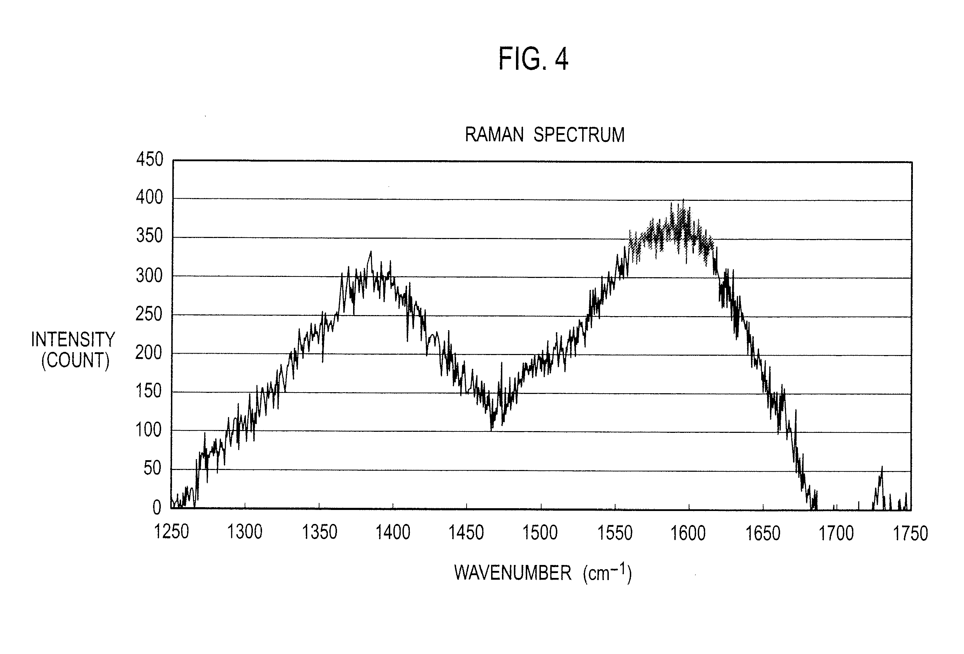

Into the critical fluid cell 1 having a capacity of 3 ml, 1.5 ml (1.32g) of benzene was introduced, and the cell was sealed. The cell was heated by the heater 5 to maintain the temperature at about 290°C, to thereby bring benzene to the critical region (equivalent to a pressure of 4. 90 MPa). Benzene was irradiated with an ultraviolet light of Nd-YAG fourth-order harmonics (wavelength 266 nm) emitted from the laser irradiating apparatus 3, 50000 times at a repetition number of 10 Hz and at an output power of 100 mW. Thereafter, the temperature of the critical fluid cell 1 was returned to room temperature, the pressure was decreased to normal pressure, and the benzene remaining in the critical fluid cell 1 was completely dried. Thus, a soot-like residue was obtained. When this was observed with a scanning electron microscope, the residue was in the form of particles having a diameter of around 10 to 30 nm, and when the residue was observed with a transmission electron microscope, the residue had a particulate structure in which multilayered walls of graphite constituted a hollow nesting form, as illustrated in FIG. 2. When an electron beam diffraction image was measured with a transmission electron microscope, an annular diffraction image, which represents a diffraction image for a polycrystalline substance, as illustrated in FIG. 3 was obtained, and thus the residue had a graphite layer structure. Furthermore, a Raman spectrum of the residue was measured, and as illustrated in FIG. 4, the intensity of the peak near 1600 cm⁻¹ was stronger than the intensity of the peak near 1370 cm⁻¹.

### (Sample 2)

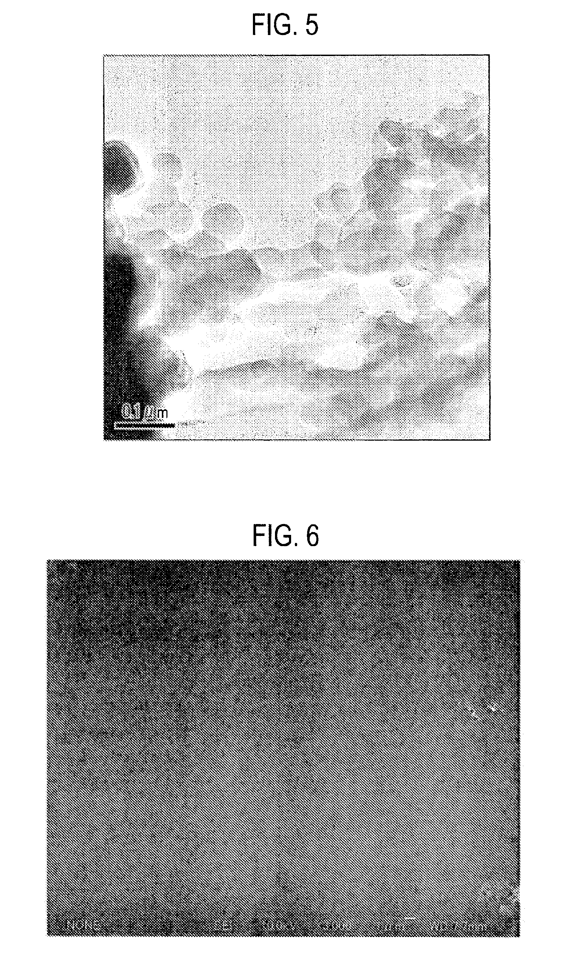

Into the critical fluid cell 1, 1.5 ml of benzene was introduced, and was maintained at 25°C. The liquid benzene was irradiated with an ultraviolet light of Nd-YAG fourth-order harmonics (wavelength 266 nm) emitted from the laser irradiating apparatus 3, 50000 times at a repetition number of 10 Hz and at an output power of 100 mW. Thereafter, the benzene remaining in the critical fluid cell 1 was completely dried, and thus a soot-like residue was obtained. When this was observed with a scanning electron microscope, the residue was in the form of particles having a diameter of around 20 to 100 nm, but when the residue was observed with a transmission electron microscope, the layered structure as illustrated in FIG. 5 was not recognized, implying that the residue was amorphous carbon particles.

### (Sample 3)

The same operation as that carried out for the sample 2 was repeated, except that the output power of ultraviolet light was changed to 300 mW, and the benzene remaining in the critical fluid cell 1 was completely dried to thereby obtain a soot-like residue. When this was observed with a scanning electron microscope, the residue was in the form of particles having a diameter of around 40 nm. When the residue was observed with a transmission electron microscope, the residue had a particulate structure in which multilayered walls of graphite constituted a hollow nesting form, as illustrated in FIG. 2.

### (Sample 4)

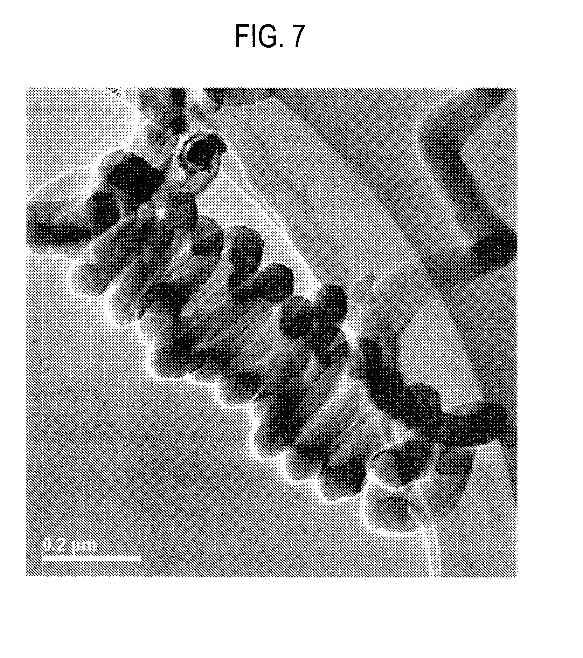

Benzene in the critical fluid cell 1 was irradiated with ultraviolet light under the same conditions as those used for the sample 1, except that a rod (φ 6 mm x 15 mm) made of stainless steel was placed in the critical fluid cell 1, and the output power of ultraviolet light was changed to 300 mW. The temperature and pressure of the critical fluid cell 1 were decreased to room temperature and normal pressure, the rod in the critical fluid cell 1 was taken out, and a soot-like residue generated on the rod was obtained. This was observed with a scanning electron microscope, and the residue had a coil shape in which string-shaped carbon having a diameter of about 50 to 300 nm was winding around, as illustrated in FIG. 6, with the diameter of the coil being about 100 nm to 3 µm and the length being about 50 µm or less. When the residue was observed with a transmission electron microscope, it was found that a coil structure was formed by amorphous carbon as illustrated in FIG. 7. This carbon coil was observed by energy dispersive X-ray spectroscopy (EDS), and the presence of nickel particles at the coil end was detected. Thus, it was confirmed that nickel was serving as the nucleus for coil formation.

### (Sample 5)

Into the critical fluid cell 1, 1.5 ml of benzene was introduced, and the cell was sealed. The cell was heated by the heater 5 to maintain the temperature at about 289°C, to thereby bring benzene to the critical state. Benzene was irradiated with a visible light of Nd-YAG second-order harmonics (wavelength 532 nm) emitted from the laser irradiating apparatus 3, 50000 times at a repetition number of 10 Hz and at an output power of 300 mW. Thereafter, the temperature of the critical fluid cell 1 was decreased, the pressure was returned to normal pressure, and the benzene remaining in the critical fluid cell 1 was completely dried to thereby obtain a soot-like residue. When this was observed with a scanning electron microscope, the residue was in the form of particles having a diameter of around 10 to 30 nm. When the residue was observed with a transmission electron microscope, it was confirmed that the residue had a particulate structure in which multilayered walls of graphite constituted a hollow nesting form, similarly to the case of the sample 1.

### (Sample 6)

Into the critical fluid cell 1, 1.5 ml of benzene was introduced, and the cell was sealed. The cell was heated by the heater 5 to maintain the temperature at 200°C, to thereby bring benzene to a subcritical state. Benzene was irradiated with an ultraviolet light of Nd-YAG fourth-order harmonics (wavelength 266 nm) emitted from the laser irradiating apparatus 3, 50000 times at a repetition number of 10 Hz and at an output power of 100 mW. Thereafter, the temperature of the critical fluid cell 1 was decreased, the pressure was returned to normal pressure, and the benzene remaining in the critical fluid cell 1 was completely dried to thereby obtain a soot-like residue. When this was observed with a scanning electron microscope, the residue was in the form of particles having a diameter of around 10 to 30 nm. When the residue was observed with a transmission electron microscope, it was confirmed that the residue had a particulate structure in which multilayered walls of graphite constituted a hollow nesting form, similarly to the case of the sample 1.

### (Sample 7)

Into the critical fluid cell 1, 1.5 ml of benzene was introduced, and the cell was sealed. The cell was heated by the heater 5 to maintain the temperature at 290°C, to thereby bring benzene to a supercritical state. Benzene was irradiated with an ultraviolet light of Nd-YAG fourth-order harmonics (wavelength 266 nm) emitted from the laser irradiating apparatus 3, 50000 times at a repetition number of 10 Hz and at an output power of 100 mW. Thereafter, the temperature of the critical fluid cell 1 was decreased, the pressure was returned to normal pressure, and the benzene remaining in the critical fluid cell 1 was completely dried to thereby obtain a soot-like residue. When this was observed with a scanning electron microscope, the residue was in the form of particles having a diameter of around 10 to 30 nm. When the residue was observed with a transmission electron microscope, it was confirmed that the residue had a particulate structure in which multilayered walls of graphite constituted a hollow nesting form, similarly to the case of the sample 1.

### (Sample 8)

Benzene in a supercritical state was irradiated with ultraviolet light under the same conditions as those used for the sample 7, except that the output power of ultraviolet light emitted by the laser irradiating apparatus 3 was changed to 300 mW, and a rod (φ 6 mm x 15 mm) made of stainless steel was placed in the critical fluid cell 1. When the benzene remaining in the critical fluid cell 1 was completely dried, coil-shaped carbon as illustrated in FIG. 6 and FIG. 7 was generated on the rod.

### (Sample 9)

Into the critical fluid cell 1, 1.5 ml of diethyl ether was introduced, and the cell was sealed. The cell was heated by the heater 5 to maintain the temperature at 194°C, to thereby bring diethyl ether to the critical state. Diethyl ether was irradiated with an ultraviolet light of Nd-YAG fourth-order harmonics (wavelength 266 nm) emitted from the laser irradiating apparatus 3, 50000 times at a repetition number of 10 Hz and at an output power of 300 mW. Thereafter, the temperature of the critical fluid cell 1 was decreased, the pressure was returned to normal pressure, and the diethyl ether remaining in the critical fluid cell 1 was completely dried to thereby obtain a soot-like residue. When this was observed with a scanning electron microscope, the residue was in the form of particles having a diameter of around 10 to 30 nm. When the residue was observed with a transmission electron microscope, it was confirmed that the residue had a particulate structure in which multilayered walls of graphite constituted a hollow nesting form, similarly to the case of the sample 1.

### (Sample 10)

Into the critical fluid cell 1, 1.5 ml of acetone was introduced, and the cell was sealed. The cell was heated by the heater 5 to maintain the temperature at 235°C, to thereby bring acetone to the critical state. Acetone was irradiated with an ultraviolet light of Nd-YAG fourth-order harmonics (wavelength 266 nm) emitted from the laser irradiating apparatus 3, 50000 times at a repetition number of 10 Hz and at an output power of 300 mW. Thereafter, the temperature of the critical fluid cell 1 was decreased, the pressure was returned to normal pressure, and the acetone remaining in the critical fluid cell 1 was completely dried to thereby obtain a soot-like residue. When this was observed with a scanning electron microscope, the residue was in the form of particles having a diameter of around 10 to 30 nm. When the residue was observed with a transmission electron microscope, it was confirmed that the residue had a particulate structure in which multilayered walls of graphite constituted a hollow nesting form, similarly to the case of the sample 1.

Furthermore, when ferrocene and benzene are introduced into the critical fluid cell 1 and sealed, the cell is heated by the heater 5 to maintain the temperature at 290°C to thereby bring ferrocene to the critical state, and ferrocene is irradiated with an ultraviolet light of Nd-YAG fourth-order harmonics (wavelength 266 nm) emitted from the laser irradiating apparatus 3, 50000 times at a repetition number of 10 Hz and at an output power of 300 mW, it is thought that an anion containing metal is generated. Even when nickelocene or cobaltocene is used in place of ferrocene, it is believed that perhaps the same results may be obtained.

### [Second embodiment]

According to the method for producing a carbon thin film related to the second embodiment, which is an application example of the first embodiment, a carbon thin film can be produced conveniently and easily at low cost. The second embodiment will be described below, mainly in terms of the difference with the first embodiment.

### [Method for producing carbon thin film]

The method for producing a carbon thin film according to the second embodiment will now be described in detail.
(A) An apparatus 20 as illustrated in FIG. 1 is prepared.
(B) Carbon dioxide as a reaction solvent and a carbon-containing compound as a raw material source for the thin film are sealed in the fluid bed 10 of the critical fluid cell 1. Examples of the carbon-containing compound include benzenes such as benzene and 1,3,5-trichlorobenzene. This is because benzenes have high dispersibility in supercritical carbon dioxide, and thus benzenes have good compatibility with supercritical carbon dioxide as the reaction solvent.
(C) A supercritical state is formed within the fluid bed 10 of the critical fluid cell 1. In general, at the critical point of carbon dioxide, a critical density of 466 kg/m³, a critical pressure of 7.38 MPa, and a critical temperature of 31.00°C are obtained. Therefore, a supercritical state of carbon dioxide can be formed by adjusting the temperature and pressure in the critical fluid cell 8 to near the values mentioned above.
   In this case, it is favorable to adjust the temperature in the fluid bed 10 so that, when the temperature of supercritical carbon dioxide is designated as T and the critical temperature as Tc, the temperature difference, T-Tc, is 3°C or more, and preferably 5°C or more. This is because a flat thin film can be formed.
   Since the critical temperature changes depending on the type and amount of the benzene introduced into the fluid bed 10, and it is difficult to present an absolute temperature, the difference from the temperature at the gas-liquid critical point of a two-component mixture system is described herein as the temperature in the fluid bed 10. In this case, although there is no particular limitation, when 1,3,5-trichlorobenzene is mixed as shown in the section for Example B that will be described later, it is preferable to adjust the temperature in the fluid bed 10 to 38°C or more, which is higher by 3°C or more than the critical temperature (35°C), and it is more preferable to adjust the temperature to 40°C or more, which is higher by 5°C or more.
   In order to obtain a more uniform thin film, it is preferable to apply an electric field. Specifically, it is preferable to apply an electric field greater than 0.40 kV/mm, more preferably 0.50 kV/mm or more, and it is even more preferable to apply an electric field of 0.60 kV/mm or more.
(D) The fluid bed 10 is irradiated with a laser beam in an ultraviolet wavelength. Examples of the laser beam in an ultraviolet wavelength include YAG (third-order harmonics): wavelength 355 nm, YAG (fourth-order harmonics) : wavelength 266 nm, YAG (fifth-order harmonics): wavelength 213 nm, KrF excimer: wavelength 248 nm, and the like.

The low permittivity (low-k) thin film production technology used in semiconductor production is one of important technologies used in the semiconductor industry. In the production of thin films according to the CVD method, raw material hydrocarbons or the like were heated to about 900°C to decompose in a chamber, and carbon was deposited on a base plate made of silicon or the like. However, according to the second embodiment, unlike the conventional thin film production technologies, thin film production is made possible at room temperature of about 35°C. Furthermore, according to the second embodiment, when a benzene which is relatively cheap and easily available, is dispersed in supercritical carbon dioxide and irradiated with a YAG laser beam, the dispersed benzene is subjected to photodecomposition, and carbon can be deposited on a silicon base plate provided in the critical fluid cell 1. In other words, according to the second embodiment, thin films can be produced easily and inexpensively.

According to the second embodiment, since carbon thin films can be produced at low temperature, the technology can be used in the production of biosemiconductor chips which make use of, e.g., heat-labile proteins.

### [Example B]

### (Example B1)

A thin film was produced by the same method as that used in the second embodiment under the following conditions, suing the apparatus 20 of FIG. 1.

Conditions: The experiment was performed using carbon dioxide as a reaction solvent, 1,3,5-trichlorobenzene as a carbon source (hydrocarbon), and YAG fourth-order harmonics (wavelength 266 nm) as a laser beam of ultraviolet wavelength, at a temperature inside the fluid bed 10 of 40°C and at the critical density.

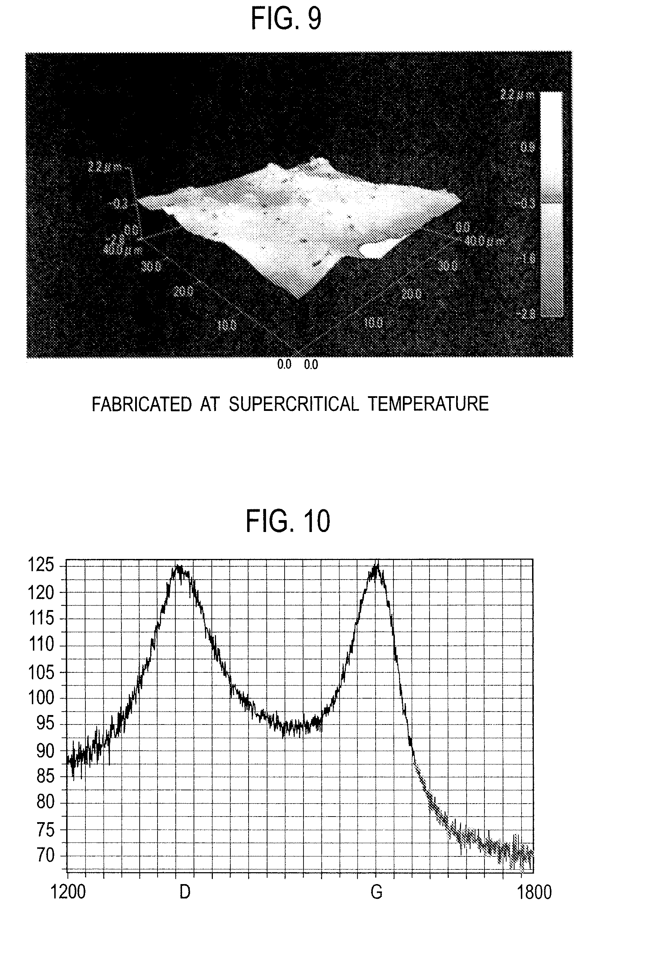

The obtained thin film was subjected to an observation with an atomic force microscope, a structural analysis of the thin film by a Raman scattering system, and a component analysis using an energy dispersive X-ray spectrometer (EDS). The obtained results are presented in FIG. 9, FIG. 10 and FIG. 11.

### (Comparative Example B1)

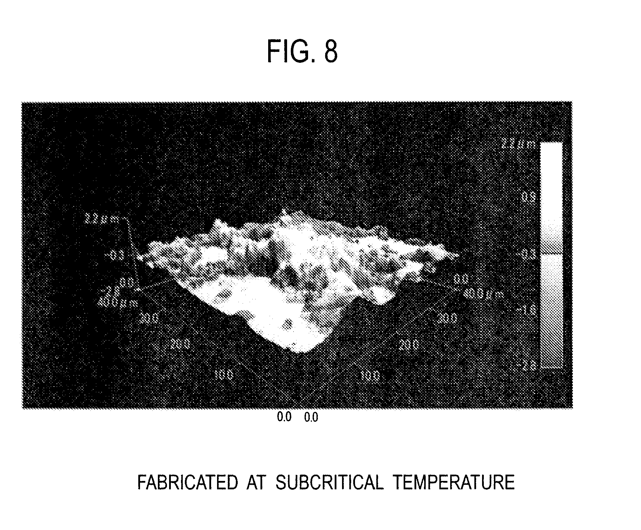

The experiment was carried out in the same manner as in Example B1, except that the temperature in the fluid bed 10 was set to 25°C and the critical density was used so that a subcritical state would be brought. The resulting thin film was subjected to an AFM observation. The obtained results are presented in FIG. 8.

According to Example B1, it was shown that a thin film having a uniform thickness was formed in a supercritical state of carbon dioxide (room temperature of about 35°C). On the other hand, according to Comparative Example B1, it was shown that a thin film having a uniform thickness was not formed in a subcritical state of carbon dioxide.

### (Example B2, Example B3), (Comparative Example B2, Comparative Example B3)

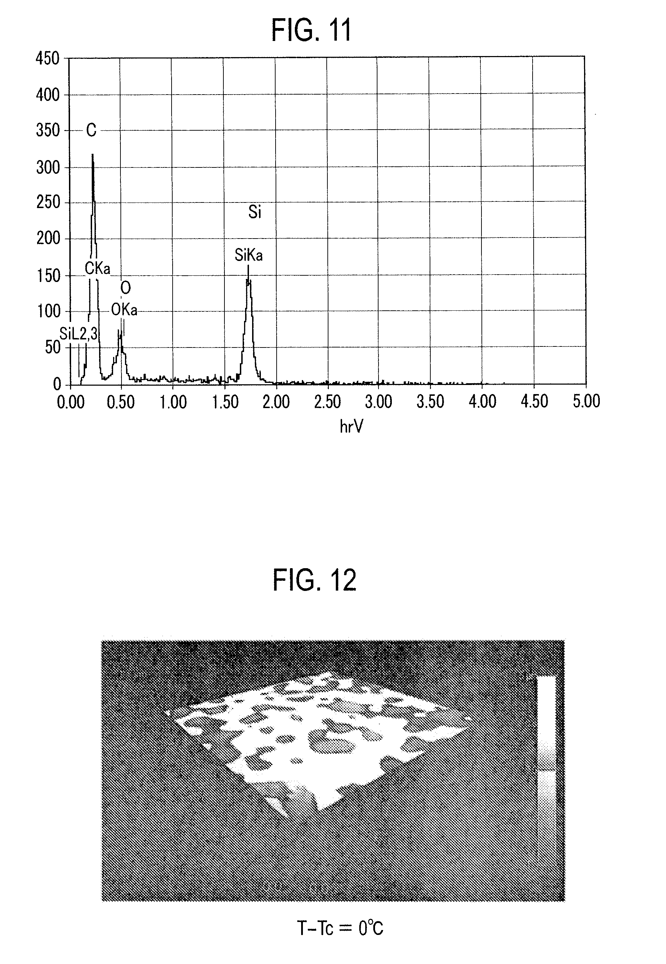

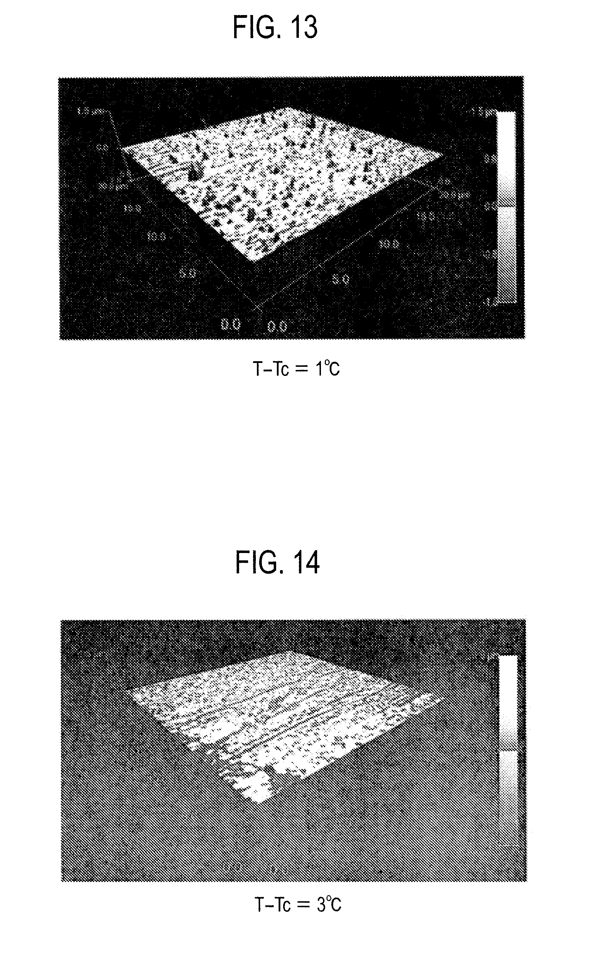

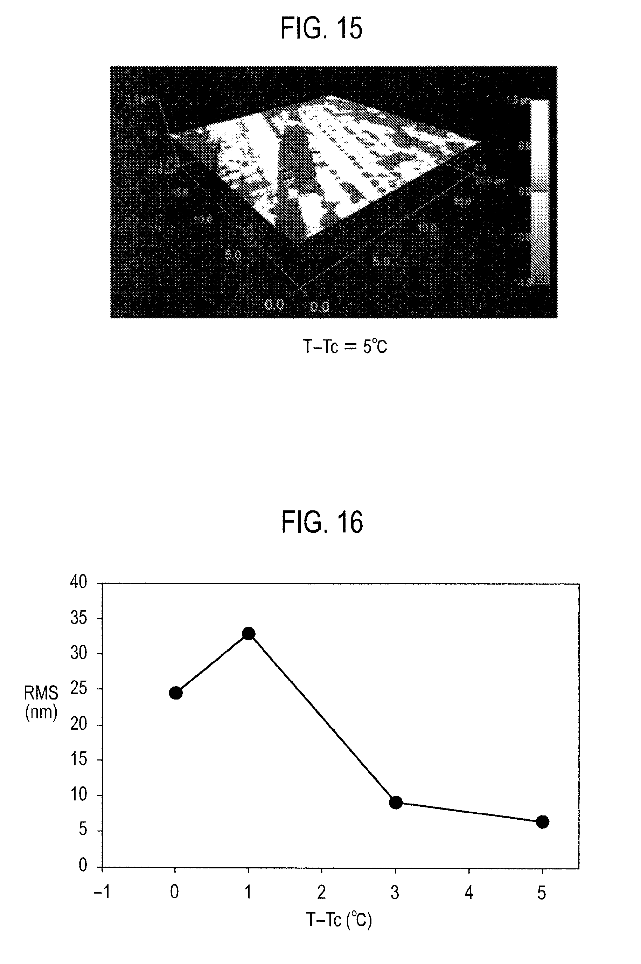

In order to represent the relationship between the temperature of supercritical carbon dioxide in the critical fluid cell 1, in which benzene is dispersed, and uniformity of the thin film or the like, the experiment was performed in the same manner as in Example B1, except that benzene was used as the carbon source, and T-Tc was set to 0°C, 1°C, 3°C and 5°C. The resulting thin film was subjected to an AFM observation. The obtained results are presented in FIG. 12 (Comparative Example B2, T-Tc =0°C), FIG. 13 (Comparative Example B3, T-Tc = 3°C), FIG. 14 (Example B2, T-Tc = 3°C), and FIG. 15 (Example B3, T-Tc = 5°C). Furthermore, in order to quantitatively evaluate the uniformity of the thin film, the value obtained by calculating the RMS of the thin film surface height calculated from the image obtained by the AFM observation is presented in FIG. 16.

From FIG. 12 to FIG. 15, it was found that the thin film surface becomes uniform as the temperature of supercritical carbon dioxide is increased.
From FIG. 16, it was found that the uniformity of the thin film surface is enhanced concomitantly with an increase in the temperature of critical carbon dioxide, that is, the temperature in the critical fluid cell 1. The RMS of the thin film surface height shows an enhancement of uniformity when T-Tc = 0°C, as compared with the case where T-Tc = 1°C, but in this case, uniformity is induced by the fact that many carbon dioxide molecules are decomposed as a result of the generation of critical opalescence. However, in regard to the characteristics of the thin film, since a large amount of decomposed carbon dioxide molecules is contained and become impurities, the condition of T-Tc = 0°C is not a favorable conditions for thin films. Accordingly, in this thin film production experiment, it was found that supercritical carbon dioxide in the critical fluid cell 1 can produce uniform a-c thin films in a temperature environment of T-Tc > about 3°C.

### [Influence of electric field on surface roughness of carbon thin films]

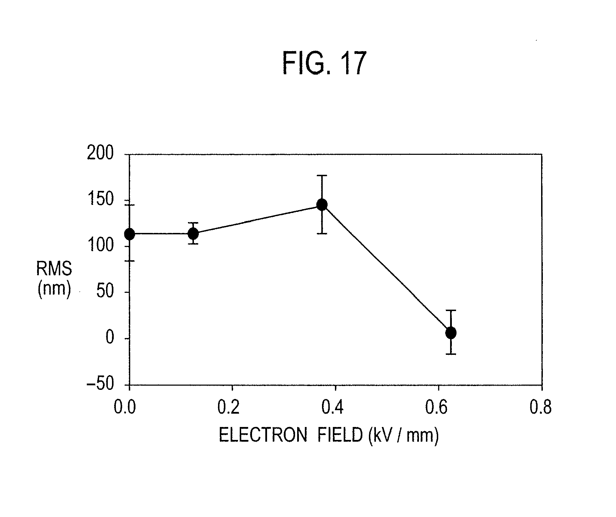

In order to show the relationship between the electric field intensity and the uniformity of a thin film, the experiment was performed in the same manner as in Example B3, except that the electric field intensity was changed. FIG. 17 illustrates changes in the RMS of the surface of a carbon thin film when the electric field intensity was changed for a fluid temperature of T-Tc = 5°C. It was found that when the electric field is made strong, the a-c thin film surface becomes uniform. A large difference is observed between electric field intensities of 0.38 kV/mm and 0. 63 kV/mm, and it was found that at an electric field intensity of 0.63 kV/mm, a thin film is formed which is 10 times or more uniform.

### [Other embodiments]

As discussed above, the present invention was described with reference to the first and second embodiments, but it should not be understood so that the discussion and drawings composing a part of this disclosure are intended to limit this invention. From this disclosure, various substitutable embodiments, examples and application technologies will be apparent to those of ordinary skill in the art.

For example, in the second embodiment, since it is considered that a fluorine-containing thin film is good for a low-k thin film, there is no problem of changing to 1,3,5-trichlorobenzene and dispersing hexafluorobenzene in supercritical carbon dioxide. Furthermore, a thin film can be produced uniformly with high efficiency by applying an electric field in the critical fluid cell 1.

As such, the present invention definitely includes various embodiments that are not described herein. Therefore, the technical scope of the present invention is defined only by the specific matters of the present invention related to the claims that are valid from the explanations described above.

The present patent application claims priority based on a preceding Japanese patent application filed by the same applicant, namely, Japanese Patent Application Nos. 2007-220324 (filing date: August 27, 2007) and 2007-267780 (filing date: October 15, 2007), the disclosures of which are incorporated herein by reference.

### Industrial Applicability

According to an aspect of the present invention, a carbon nano/microstructure can be produced at a temperature lower than those used conventionally, and the stability of the supply of carbon nano/micro particles, carbon nano/microcoils and the like can be increased. Furthermore, since carbon nano/microstructures can be produced by directly decomposing a wide variety of organic carbon compounds as raw materials, without limiting the raw material to carbon materials, effectively use of carbon compounds that are recovered from waste materials or the like, as production raw materials for functional materials, is promoted.
According to an aspect of the present invention, there is provided a method for producing a carbon thin film that can be produced easily and inexpensively.

## Claims

1. A method for decomposing a carbon-containing compound comprising:
changing the condition of the carbon-containing compound into a subcritical fluid, a critical fluid or a supercritical fluid state
irradiating the carbon-containing compound with light to decompose,
wherein the carbon-containing compound is an organic compound.

2. The method for decomposing a carbon-containing compound according to claim 1, wherein the light in the irradiating step includes a light having the absorption band wavelength of the carbon-containing compound.

3. The method for decomposing a carbon-containing compound according to claim 2, wherein the carbon-containing compound includes an aromatic compound, and the light in the irradiating step includes a light in the ultraviolet wavelength region.

4. The method for decomposing a carbon-containing compound according to any one of claims 1 to 3, wherein the light irradiated in the irradiating includes a laser beam.

5. The method for decomposing a carbon-containing compound according to any one of claims 1 to 4, wherein the carbon-containing compound includes benzene or halogenated benzene.

6. A method for producing a carbon nano/microstructure comprising:
generating a carbon nano/microstructure according to the method for decomposing a carbon-containing compound according to claim 1, from the carbon-containing compound.

7. A method for producing a carbon nano/microstructure comprising:
generating a carbon nano/microstructure according to the method for decomposing a carbon-containing compound according to claim 2, from the carbon-containing compound.

8. A method for producing a carbon nano/microstructure comprising:
generating a carbon nano/microstructure according to the method for decomposing a carbon-containing compound according to claim 3, from the carbon-containing compound.

9. A method for producing a carbon nano/microstructure comprising:
generating a carbon nano/microstructure according to the method for decomposing a carbon-containing compound according to claim 4, from the carbon-containing compound.

10. A method for producing a carbon nano/microstructure comprising:
generating a carbon nano/microstructure according to the method for decomposing a carbon-containing compound according to claim 5, from the carbon-containing compound.

11. The method for producing a carbon nano/microstructure according to any one of claims 6 to 10, wherein the carbon-containing compound is decomposed in the co-presence of a metal which serves as a nucleus for the formation of the carbon nano/microstructure.

12. A method for producing a carbon thin film comprising:
sealing a carbon-containing compound in a critical fluid cell, and forming a supercritical state; and
irradiating the content of the critical fluid cell with a laser beam in an ultraviolet wavelength.

13. The method for producing a carbon thin film according to claim 12, wherein the carbon-containing compound is 1,3,5-trichlorobenzene.

14. The method for producing a carbon thin film according to claim 12, wherein the carbon-containing compound is hexafluorobenzene.

15. The method for producing a carbon thin film according to claim 12, further comprising adjusting the temperature in the fluid bed so that, when the supercritical temperature is designated as T and the critical temperature as Tc, the temperature difference, T-Tc, is 3°C or more.

16. The method for producing a carbon thin film according to claim 12, further comprising adjusting the temperature in the fluid bed so that, when the supercritical temperature is designated as T and the critical temperature as Tc, the temperature difference, T-Tc, is 5°C or more.

17. The method for producing a carbon thin film according to claim 12, further comprising applying an electric field of 0.40 kV/mm or more.

18. The method for producing a carbon thin film according to claim 12, further comprising applying an electric field of 0.50 kV/mm or more.
